# EUROPÄISCHE PATENTANMELDUNG

(11) **EP 1 712 326 A2**
(43) Veröffentlichungstag der Anmeldung: **18.10.2006**
(21) Anmeldenummer: 06112657.9
(22) Anmeldetag: 13.04.2006
(51) Int. Cl.: B23K 35/02, B21K 1/56, F16B 41/00, F16B 43/00

(54) **Befestigungselement und Verfahren zu seiner Herstellung**

(30) Priorität: 14.04.2005 DE 102005017379
(71) Anmelder: Newfrey LLC, Newark, Delaware 19711 (US)
(72) Erfinder: Geist, Joachim, 35325, Mücke (DE); Pimper, Ralf, 35315, Homberg/Ohm (DE); Durand, Philippe, 80140, Duodelainville (FR)
(74) Vertreter: Haar, Lucas Heinz Jörn

(57) **Zusammenfassung**

Ein Befestigungselement (1), umfassend einen metallischen Schweißbolzen (2) mit einem Kopf (4), der einen Anschweißabschnitt (5) und einen radial über den Anschweißabschnitt hinausragenden Flansch (8) aufweist, und mit einem Schaft (9), der mit einem Außengewinde (10) versehen ist, weist eine Unterlegscheibe (3) auf, die zwischen dem Kopf (4) und dem Außengewinde (10) auf dem Schaft (9) des Schweißbolzens (2) unlösbar gehalten ist und die einen größeren Außendurchmesser hat als der Flansch (8).

## Beschreibung

Die Erfindung betrifft ein Befestigungselement, umfassend einen metallischen Schweißbolzen mit einem Kopf, der einen Anschweißabschnitt und einen radial über den Anschweißabschnitt hinausragenden Flansch aufweist, und mit einem Schaft, der mit einem Außengewinde versehen ist. Die Erfindung betrifft weiterhin ein Verfahren zur Herstellung eines Befestigungselements.

Ein Befestigungselement der angegebenen Art ist aus G 94 13 406.5 bekannt. Verwendet werden derartige Befestigungselemente vorwiegend im Fahrzeugbau, wobei der Schweißbolzen mit seinem Kopf an den Rahmen, die Karosserie oder Karosserieteile angeschweißt wird und anschließend mit Hilfe von Muttern, Klammern oder Clipsen Bauteile an dem Schaft des Schweißbolzens befestigt werden. Der Flansch des Schweißbolzens bildet hierbei das Widerlager, an welchem sich die auf dem Schaft angeordneten Bauteile abstützen. Von der Größe des Flansches hängt daher die maximale Größe der den Schaft umgebenden Öffnung des Bauteils ab, da bei zu großer Öffnung im Vergleich zur Größe des Flansches eine ausreichende Abstützung des Bauteils an dem Flansch nicht mehr gewährleistet ist. Die Größe der den Schaft umgebenden Öffnung des Bauteils bestimmt andererseits aber auch die größtmögliche Lageabweichung, die das Bauteil relativ zum Schweißbolzen haben darf. Sollen große Lageabweichungen zugelassen werden, so erfordert dies eine entsprechend große Öffnung und einen noch größeren Flansch. Das Herstellen von Schweißbolzen mit größerem Flansch ist jedoch aufwendig und entsprechend teuer und stößt mit zunehmender Größe an fertigungstechnische Grenzen.

Bei Schrauben ist es bekannt, die Anlagefläche am Schraubenkopf für das mit der Schraube zu befestigende Bauteil durch Anbringen einer Unterlegscheibe zwischen Schraubkopf und Bauteil zu vergrößern. Es ist auch bekannt, eine Unterlegscheibe fest mit der Schraube zu verbinden, beispielsweise durch Verstemmen mit dem Gewindeauslauf des Außengewindes am Schraubenschaft (DE 20 2004 006 108 U1).

Der Erfindung liegt die Aufgabe zugrunde, ein Befestigungselement der eingangs genannten Art zu schaffen, welches ein relativ großflächiges Widerlager für die zu befestigenden Bauteile aufweist und welches einfach und kostengünstig herstellbar ist. Es ist weiterhin Aufgabe der Erfindung, ein einfaches und kostengünstiges Verfahren zur Herstellung eines solchen Befestigungselements anzugeben.

Die Aufgabe wird durch das in Anspruch 1 angegebene Befestigungselement bzw. das in Anspruch 4 angegebene Verfahren gelöst.

Nach der Erfmdung weist das Befestigungselement eine Unterlegscheibe auf, die zwischen dem Kopf und dem Außengewinde auf dem Schaft des Schweißbolzens unlösbar gehalten ist und die einen größeren Außendurchmesser hat als der Flansch. Vorzugsweise ist der Außendurchmesser der Unterlegscheibe wenigstens 50 % größer als der Außendurchmesser des Flansches.

Die Unterlegscheibe kann durch Verstemmen des Randes ihrer den Schaft umgebenden Öffnung an dem Schweißbolzen befestigt sein. Zu bevorzugen ist erfindungsgemäß jedoch eine Befestigung, bei der die Öffnung der Unterlegscheibe einen Innendurchmesser hat, der größer ist als der Außendurchmesser des Schaftes und kleiner als der Außendurchmesser des Außengewindes. Bei einer solchen Gestaltung wird die Unterlegscheibe sicher gehalten, bleibt jedoch gegenüber dem Schaft begrenzt beweglich, so daß kleine Winkelabweichungen zwischen dem Flansch des Schweißbolzens und dem Bauteil ausgeglichen werden können.

Zum Ausgleich größerer Winkelabweichungen kann außerdem vorgesehen sein, daß der axiale Abstand zwischen dem Kopf des Schweißbolzens und dem Außengewinde größer ist als die Dicke der Unterlegscheibe.

Das erfindungsgemäße Befestigungselement eignet sich vor allem zum Befestigen von Bauteilen wie Kotflügeln, Verkleidungsteilen, Front- und Heckscheibenwischern, die größere Befestigungsöffnungen zum Ausgleich von größeren Maßabweichungen haben. Das Befestigungselement kann einfach und kostengünstig hergestellt werden.

Der Kopf des Schweißbolzens kann eine Größe haben, die im Wege der Kaltumformung z.B. auf einer Vierstationenpresse ausgebildet werden kann. Auch die Kosten für die Unterlegscheibe und ihre Anbringung sind vergleichsweise gering, so daß sich das Befestigungselement insgesamt als kostengünstig erweist. Das Gewicht des erfindungsgemäßen Befestigungselements ist deutlich kleiner als das Gewicht eines vergleichbaren einteiligen Befestigungselements. Es wurde weiterhin gefunden, daß sich das erfindungsgemäße Befestigungselement gut verschweißen läßt. Da der Schweißbolzen und die Unterlegscheibe eine bauliche Einheit bilden, können sie rationell gefördert und dem Schweißgerät zugeführt werden. Der an dem Schweißkopf vorhandene Flansch hält beim Schweißvorgang Schweißspritzer zurück, so daß auch die plane Anlage der Unterlegscheibe an dem Kopf des Schweißbolzens durch den Schweißvorgang nicht beeinträchtigt wird.

Zur Herstellung des erfindungsgemäßen Befestigungselements sind nach der Erfindung folgende Verfahrensschritte vorgesehen:
a) Aus einem Drahtabschnitt wird der Schweißbolzen mit Kopf und glattem Schaft durch Kaltumformen geformt,
b) auf den Schaft des Schweißbolzens wird die Unterlegscheibe bis zur Anlage an den Kopf aufgebracht,
c) auf den Schaft des Schweißbolzens wird das Außengewinde gewalzt.

Bei Bedarf kann in einem weiteren Verfahrensschritt das Befestigungselement mit einer Korrosionsschutzschicht überzogen werden.

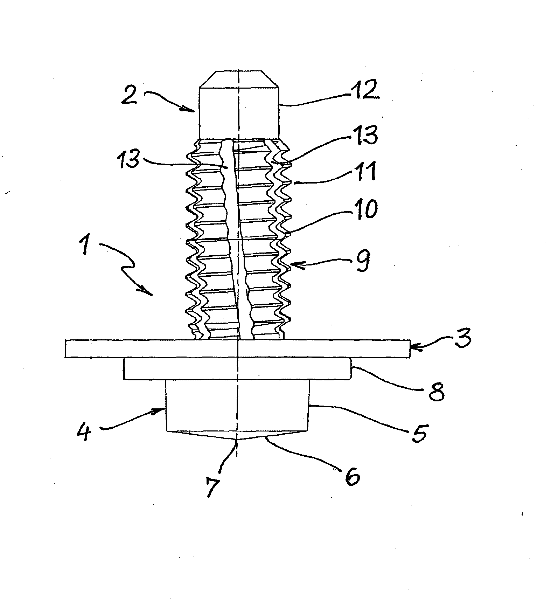

Die Erfindung wird nachfolgend anhand eines Ausführungsbeispiels näher erläutert, das in der Zeichnung dargestellt ist.

Die Zeichnung zeigt ein Befestigungselement 1, bestehend aus einem Schweißbolzen 2 und einer Unterlegscheibe 3. Der Schweißbolzen 2 hat einen Kopf 4 mit einem zylindrischen Anschweißabschnitt 5, der eine keglige Stirnfläche 6 zur Bildung einer Zündspitze 7 hat. Auf der der Stirnfläche 6 entgegengesetzte Seite bildet der Kopf 4 einen kreisscheibenförmigen Flansch 8, dessen Außendurchmesser etwa 40 % bis 50 % größer ist als der Außendurchmesser des Anschweißabschnitts 5.

Der Kopf 4 ist einstückig angeformt an einen zylindrischen Schaft 9, dessen Durchmesser kleiner ist als der Durchmesser des Anschweißabschnitts 5. Der Schaft 9 weist einen mit einem Außengewinde 10 versehenen Gewindeabschnitt 11 und einen gewindelosen Endabschnitt 12 auf, der an seinem Ende eine kegelstumpfförmige Verjüngung hat, durch die die Montage von Bauteilen und Befestigungselementen, wie Muttern oder Klammern, begünstigt wird. Das Außengewinde ist mit mehreren, sich in Längsrichtung erstreckenden Nuten 13 versehen, die die Gewindegänge unterbrechen und Freiräume zur Aufnahme von Lackresten oder Schmutz bilden.

Die Unterlegscheibe 3 ist zwischen dem Flansch 8 und dem Gewindeabschnitt 11 auf dem Schaft 9 gehalten, der die zentrale, vorzugsweise kreisförmige Öffnung in der Unterlegscheibe 3 durchdringt. Der Durchmesser dieser Öffnung ist kleiner als der Außendurchmesser des Außengewindes 10 aber etwas größer als der Außendurchmesser des Schaftes 9. Die Unterlegscheibe 3 ist daher in radialer Richtung geringfügig relativ zum Schaft beweglich. Auch in axialer Richtung ist der Abstand des Außengewindes 10 von dem Flansch 8 etwas größer als die Dicke der Unterlegscheibe 3, so daß diese auch axial begrenzt relativ zum Schaft 9 beweglich ist und daher auch eine etwas geneigte Lage zum Flansch 8 einnehmen kann. Der Außendurchmesser der Unterlegscheibe 3 ist etwa 50 % größer als der Außendurchmesser des Flansches 8, kann aber auch kleiner oder größer bemessen sein. Durch die Unterlegscheibe 3 wird eine vergleichsweise große Anlagefläche für die an dem Befestigungselement 1 zu befestigenden Bauteile geschaffen. Die Bauteile können daher ohne Nachteil eine verhältnismäßig große Öffnung für die Aufnahme des Schaftes 9 haben, so daß auch große Lageabweichungen zwischen der Position des Befestigungselements 1 und der gewünschten Position des Bauteils durch radiale Verschiebung des Bauteils gegenüber dem Schaft 9 ausgeglichen werden können. Auch das Befestigen von Bauteilen aus weicheren Werkstoffen wird durch die große Anlagefläche der Unterlegscheibe 3 begünstigt.

Das Befestigen des Befestigungselements 1 beispielsweise an einer Fahrzeugkarosserie erfolgt durch Anschweißen des Anschweißabschnitts 5 nach dem Hubzündungs-Schweißverfahren. Hierzu wird das Befestigungselement 1 mit dem Schaft 9 in die Schweißzange einer Hubzündungs-Schweißvorrichtung eingesetzt und dann an einer vorgesehenen Stelle an die Karosserie angeschweißt. Dieser Vorgang kann sowohl mittels Handschweißvorrichtungen als auch mittels vollautomatischer Schweißvorrichtungen durchgeführt werden. Nach dem Verschweißen ist das Befestigungselement 1 fest mit der Karosserie verbunden, so daß an der Karosserie anzubringende Bauteile lediglich auf den Schaft 9 aufgesteckt und dann mit Hilfe eines Halteelements, beispielsweise einer Mutter oder einer Klammer, fixiert werden müssen.

## Patentansprüche

1. Befestigungselement, umfassend einen metallischen Schweißbolzen mit einem Kopf, der einen Anschweißabschnitt und einen radial über den Anschweißabschnitt hinausragenden Flansch aufweist, und mit einem Schaft, der mit einem Außengewinde versehen ist, **gekennzeichnet durch** eine Unterlegscheibe (3), die zwischen dem Kopf (4) und dem Außengewinde (10) auf dem Schaft (9) unlösbar gehalten ist und einen größeren Außendurchmesser hat als der Flansch (8).

2. Befestigungselement nach Anspruch 1, **dadurch gekennzeichnet, daß** die Bohrung der Unterlegscheibe (3) einen Innendurchmesser hat, der größer ist als der Außendurchmesser des Schaftes (9) und kleiner als der Außendurchmesser des Außengewindes (10).

3. Befestigungselement nach einem der Ansprüche 1 oder 2, **dadurch gekennzeichnet, daß** der axiale Abstand zwischen dem Kopf (4) des Schweißbolzens und dem Außengewinde (10) größer ist als die Dicke der Unterlegscheibe (3).

4. Verfahren zur Herstellung eines Befestigungselements nach einem der vorhergehenden Ansprüche, umfassend folgende Schritte:
a) Aus einem Drahtabschnitt wird der Schweißbolzen mit Kopf und glattem Schaft durch Kaltumformen geformt,
b) auf den Schaft des Schweißbolzens wird die Unterlegscheibe bis zur Anlage an den Kopf aufgebracht,
c) auf den Schaft des Schweißbolzens wird das Außengewinde gewalzt.

5. Verfahren nach einem Anspruch 4, **dadurch gekennzeichnet, daß** nach Beendigung des Verfahrensschritts c) das Befestigungselement mit einer Korrosionsschutzschicht überzogen wird.
